(19) **Europäisches Patentamt / European Patent Office / Office européen des brevets**

(11) **EP 1 644 725 B1**

(12) **EUROPEAN PATENT SPECIFICATION**

(45) Date of publication and mention
of the grant of the patent:
**20.01.2010 Bulletin 2010/03**

(51) Int Cl.:
***G01N 27/333*** (2006.01)

(21) Application number: **04738993.7**

(22) Date of filing: **09.07.2004**

(86) International application number:
**PCT/DK2004/000496**

(87) International publication number:
**WO 2005/005975 (20.01.2005 Gazette 2005/03)**

(54) **CHLORIDE SELECTIVE ELECTRODE**

CHLORID-SELEKTIVE ELEKTRODE

ELECTRODE SELECTIVE A L'EGARD DU CHLORE

(84) Designated Contracting States:
**AT BE BG CH CY CZ DE DK EE ES FI FR GB GR HU IE IT LI LU MC NL PL PT RO SE SI SK TR**

(30) Priority: **10.07.2003 US 617337**

(43) Date of publication of application:
**12.04.2006 Bulletin 2006/15**

(73) Proprietor: **Radiometer Medical ApS**
**2700 Broenshoej (DK)**

(72) Inventor: **SAMPRONI, Jennifer, A.**
**San Diego, CA 92102 (US)**

(56) References cited:
**EP-A- 0 653 630**      **US-A- 4 629 744**
**US-B1- 6 340 714**

- **PATENT ABSTRACTS OF JAPAN vol. 0173, no. 69 (P-1572), 12 July 1993 (1993-07-12) & JP 5 060724 A (JOKO:KK), 12 March 1993 (1993-03-12)**
- **PATENT ABSTRACTS OF JAPAN vol. 0171, no. 89 (P-1521), 13 April 1993 (1993-04-13) & JP 4 340454 A (HITACHI LTD), 26 November 1992 (1992-11-26)**
- **"Product Bulletin EPI-Cure(TM) Curing Agent 3140" 2001, RESOLUTION PERFORMANCE PRODUCTS LLC Retrieved from the Internet: URL:http://www.bamboorodmaking.com/Epi-Cur e_3140_-_SC1680.pdf> [retrieved on 2006-09-22] * the whole document ***

**Description**

The present invention relates to a chloride selective electrode and a system and a sensor assembly comprising such chloride selective electrode, the chloride selective electrode membrane comprising an epoxy resin and an amine containing an amide group.

Ion selective electrodes (ISEs) are widely used to measure the concentration of ions in fluids. ISEs have been employed in a wide variety of potentiometric determinations including, for example, determination of the fluoride ion in drinking water and determination of various electrolytes in biological fluids. Thus, ISEs are routinely used to determine sodium, calcium, magnesium, potassium, lithium and chloride ions in serum and blood.

Generally, ISEs are composed of an ion selective electrode membrane, an electrolyte and an internal reference electrode. The electrolyte may be a separate phase or it may be an integral part of the membrane, *i.e.* the membrane may act as electrolyte. An ISE and an external reference electrode make up a potentiometric cell system. The external reference electrode used in conjunction with the ISE is typically a metal/metal halide electrode such as Ag/AgCl. Selective transfer of the ion of interest from the sample solution to the ion selective electrode membrane produces a potential difference across the membrane. The mathematical expression, which relates the potential difference across the membrane to the difference in activity, is the Nernst Equation. The measured potential difference (ISE versus outer reference electrode potentials) is linearly dependent on the logarithm of the activity of a given ion in solution, and can be used to quantify the ion under investigation. The slope of the linear dependency is defined as the sensitivity. If the membrane's sensitivity does not remain constant during repeated exposure to sample fluids, inaccurate or spurious measurements will be produced and the electrode will have limited use life. The ion of interest in the present invention is the chloride ion, hence the terms "chloride selective electrode membrane" and "chloride selective electrode".

A general discussion of the principles of potentiometric ion sensors is provided by Oesch et al., "Ion Selective Membranes for Clinical Use," Clinical Chemistry, Vol.32, No.8, pp 1448-1459 (1986) and by Burnett et al, "Use of Ion Selective Electrodes for Blood-Electrolyte Analysis" Clin. Chem. Lab Med. Vol.38, No. 4, pp 363-370 (2000) and the International Union of Pure and Applied Chemistry (IUPAC) Analytical Compendium, Chapter 8, Section 3.2.1, "General Terms Related to Ion Selective Electrodes".

Many attempts have been made to determine chloride ions in fluid samples using chloride selective electrode membranes. Thus, chloride selective electrode membranes are typically formed from a plasticized polymer matrix, which contains an ionophore selective for chloride. A specific example of such a membrane consists of polyvinylchloride, a quaternary ammonium ionophore and a plasticizing agent for imparting ion motility to the membrane. Examples of ammonium compounds include tridodecylmethylammonium chloride and tetradodecylammonium chloride. Generally, such chloride selective components are chosen for their lipophilic properties, which contribute to enhanced membrane life. Unfortunately, fluids in contact with the membrane can extract plasticizers and ionophores out of the membrane causing the sensitivity of the membrane to be gradually compromised. This is particularly problematic when heparinized plasma samples are analyzed because heparin has been found to adversely affect the membrane and electrode use life. Use life of an electrode is generally defined as the amount of exposure required to cause the sensitivity to fall below 60% Nernstian.

Another requirement for a chloride selective electrode membrane is that it has a minimal response to substances other than the analyte of interest. This characteristic is known as selectivity. Sample fluids often contain substances, which interfere with the electrode membrane thereby producing a spurious electrical response. With respect to chloride selective electrode membranes, a particularly difficult challenge is achieving high selectivity over salicylates (in blood and urine) and maintaining this selectivity during repeated exposure of the membrane to such interfering substances.

Product Bulletin EPI-CURE™ Curing agent 3140 from Resolution Performance Products LLC. discloses a curing agent being a low viscosity reactive polyamide, high imidazoline, moderate molecular weight epoxy curing agent based on dimerized fatty acids and polyamines. The Bulletin discloses examples of epoxy resins cured with the curing agent in the form of 1/8 inch thick test specimens.

United States Patent US 6,340,714 to Hoffmann-La Roche discloses a chloride-sensitive electrode membrane comprising an epoxy resin with a flexibilizer and an amino compound curing agent in specified proportions. As amino compound triethylene tetramine (TETA) is used.

According to US 6,340,714, the amino compound further acts as an ionophore in the membrane, thereby eliminating the problems related to conventional ionophores. Depending on the concentration, however, the use of TETA tends to compromise the membrane mechanical properties like flexibility and adhesion to substrates or its selectivity.

Accordingly, degradation of the sensitivity and/or selectivity of chloride selective electrode membranes remains a significant problem. Extending the use life of such membranes by increasing the stability of membrane sensitivity and selectivity without adversely affecting the mechanical properties also presents significant challenges.

It is an object of the present invention to provide a chloride selective electrode membrane with stable sensitivity and good selectivity over interfering substances. It is a further object of the invention to provide a chloride selective electrode membrane, which possesses a long use life and good mechanical properties.

To attain the abovementioned objectives, the present invention provides a chloride selective electrode comprising an internal reference electrode and a membrane comprising a polymeric matrix wherein the matrix comprises an epoxy resin and an amine. The amine contains an amide group and is present in stoichiometric excess.

In the membrane, the amine functions as both a curing agent and a chloride selective agent. During curing of the epoxy, amino groups of the amine react with epoxy groups of the resin, thereby creating a polymeric network. In the membrane the active ion exchange sites are the secondary (-NHR) and tertiary (-NRR) amino groups present in the amine. Use of the amine containing an amide group eliminates the need to employ additional chloride ionophores, yet achieving superior membrane mechanical properties.

The presence of amide groups in the amine is advantageous as these groups can undergo intra-molecular reaction with residual amino groups thereby forming cyclic structures. The most common cyclic structure to form is the imidazoline structure. Cyclization is accomplished by means of a high reaction temperature that converts the open amide structure to a cyclic structure. The reaction is reversible and amide groups may be recovered in the presence of water. Due to the presence of imidazoline groups curing of the epoxy resin is slowed down providing for a longer pot life and easier fabrication of membranes.

The amine containing an amide group has the general formula $(NR_1R_2)$-$R_3$-$NR_4$-$C(=O)$-$R_5$, $R_1$, $R_2$, and $R_4$ are selected from hydrogen and $C_1$-$C_{10}$ alkyl and halogenated or hydroxylated modifications thereof. Preferably $R_1$, $R_2$ and $R_4$ are all hydrogen. $R_3$ may be any aliphatic or aromatic group. Preferably $R_3$ contains one or more amine functions. $R_5$ may be any aliphatic or aromatic group, which in turn may contain additional amine and/or amide functionalities. Preferably $R_5$ comprises a $C_{10}$-$C_{24}$ aliphatic group.

The amine may be a monomer or, as $R_5$ may comprise repeat units, the amine may be an oligomer or a polymer, the average molecular weight of the amine preferably being in the range MW=200-10,000, more preferably MW=200-2,000. Probably any long chain amino-terminated compound may have potential as a chloride selective electrode membrane material. Thus, amines containing a cyano alkylene group, an alkylene oxide group and/or a keto group may be used as well.

The invention requires that a stoichiometric excess of the amine be employed in the chloride selective electrode membrane. The stoichiometric excess is defined as the excess of amine employed over the amount of amine required for complete curing of the epoxy resin. The stoichiometric excess of amine provides for selectivity of the membranes. Although not fully understood this may be due to better chloride exchange capability of the amino groups of the non-bound amine compound compared to the capability of the amino groups of the amine bound in the polymeric network.

The amine containing an amide group is a polyamide, an amidoamine or a mixture thereof.

The polyamides of the present invention have the general formula $(NR_1R_2)$-$R_3$-$(NR_4$-$C(=O)$-$R_6$-$R_6$-$C(=O)$-$NR_4$-$R_3)_n$-$(NR_1R_2)$, *i.e.* they are the reaction products of multifunctional amines and diacids. With the amine being a polyamide, $R_1$, $R_2$, and $R_4$ are selected from hydrogen and $C_1$-$C_6$ alkyls. $R_3$ is $C_2$-$C_{10}$ alkyls, preferably containing one or more amine functions. $R_6$ is $C_8$-$C_{24}$ aliphatic groups, preferably containing 1-4 unsaturated functionalities. Preferably n=1-20, more preferably n=1-5. The average molecular weight of the polyamide is preferably in the range MW=400-8,000, more preferably MW=400-2,000.

The amidoamines of the present invention have the general formula $(NR_1R_2)$-$R_3$-$NR_4$-$C(=O)$-$R_5$, *i.e.* they are the reaction products of multifunctional amines and acids. With the amine being an amidoamine, $R_1$, $R_2$, and $R_4$ are selected from hydrogen and $C_1$-$C_6$ alkyls. Further, $R_3$ is $C_2$-$C_{10}$ alkyls, preferably containing one or more amine functions, and $R_5$ is $C_8$-$C_{24}$ aliphatic groups, preferably containing 1-4 unsaturated functionalities. The average molecular weight of the amidoamine is preferably in the range MW=200-1,000, more preferably MW=300-500.

The polyamides and amidoamines provide very good selectivity of the membrane as well as good mechanical properties. As polyamides and amidoamines are rather long chain molecules, they provide for a low glass transition temperature ($T_g$) of the polymer and impart flexibility to the cured epoxy, thus lowering the membrane impedance and increasing the sensitivity.

Polyamides are preferably the reaction products of saturated or unsaturated fatty acid dimers and polyalkylene polyamines. Preferably the polyamine is diethylene triamine (DETA), triethylene tetramine (TETA) or tetraethylene pentamine (TEPA). Saturated fatty acids may preferably be palmitic acid or stearic acid. Unsaturated fatty acids that may preferably be used in the preparation of the fatty acid dimer include $C_{18}$ unsaturated fatty acids such as oleic acid, linoleic acid, linolenic acid, *i.e.* mono- and polyunsaturated fatty acids. Excellent membrane properties are obtained with polyamides based on such acids, probably due to the lengthy polyamide chain influencing the lipophilicity of the membrane and imparting some steric hindrance, contributing to the chloride selectivity.

EPIKURE® 3140 curing agent, which is produced by reacting tall oil fatty acid with TETA and which is available from Resolution Performance Products, is a representative of a class of commercial polyamide curing agents that may be used in the present invention. Tall oil fatty acids are primarily a mixture of palmitic acid, stearic acid, oleic acid and linoleic acid. Commercially available acid dimers derived from castor oil, linseed oil, soybean oil and the like may also be used in the present invention.

Amidoamines are preferably the reaction products of an acid component selected from the group of saturated and unsaturated fatty acids and an amine component selected from alkylene diamines, polyalkylene polyamines, and mixtures thereof. Preferably the amine component is DETA, TETA or TEPA. Fatty acids that may be utilized in the preparation of amidoamines of the invention include, but are not limited to palmitic acid, stearic acid, oleic acid, linoleic acid, linolenic acid and the like. EPIKURE® 3055 curing agent from Resolution Performance Products is a representative of a commercially available amidoamine curing agent that may be advantageously employed.

The epoxy resin utilized in the present invention can be any epoxy resin, which can be cured by amines disclosed herein. Generally, the epoxy resin can be any curable epoxy resin having a 1,2-epoxy equivalency greater than one and preferably, on the average, more than about 1.5 epoxide groups per molecule. The epoxy resin can be saturated or unsaturated, linear or branched, aliphatic, cycloaliphatic, aromatic or heterocyclic, and may bear substituents which do not materially interfere with the curing reaction. One group of suitable epoxy resins are those produced by the reaction of a polyhydric alcohol or phenol with excess epichlorohydrin under basic conditions such as in an alkaline reaction medium or in the presence of a suitable base. Preferably the epoxy resin is a polyglycidyl ether of a polyhydric phenol. Examples of suitable polyhydric phenols include: 2,2-bis(4-hydroxyphenyl) propane (bisphenol-A); 2,2-bis(4-hydroxy-3-tert-butylphenyl) propane; 1,1-bis(4-hydroxyphenyl) ethane; 1,1-bis(4-hydroxyphenyl) isobutane; 1,1-bis(4-hydroxy-3-alkylphenyl) ethane and the like. Suitable dihydric phenols can also be obtained from the reaction of phenol with aldehydes such as formaldehyde (bisphenol-F). Commercial examples of preferred epoxy resins that can be advantageously employed in the present invention include, for example, EPON® epoxy resins available from Resolution Performance Products, DER® epoxy resins available from Dow Chemical Company and Araldite® epoxy resins available from Ciba Geigy.

Specific examples of epoxy resins include EPON® epoxy resin 828, DER® epoxy resin 331 and Araldite® epoxy resin GY 60202. The general structure of these resins, which are polyglycidyl ethers, consists of epoxide groups at each end and a repeat unit in the middle. Because of the varying number of repeat units, which can be incorporated into the resin, varying viscosities can be obtained.

Most preferably, the epoxy resin is a polymer of bisphenol A and epichlorohydrin.

Surprisingly it has been observed that when the amine is applied in a stoichiometric excess of more than 150%, *i.e.* more than 2.5x the amount of amine required for complete curing of the resin, particularly good membrane properties are obtained. When the amine is a polyamide, the stoichiometric excess should preferably be in the range 150-700%, more preferably in the range 160-220%, most preferably around 200%. When the amine is an amidoamine, the stoichiomeric excess should preferably be in the range 150-250%.

The membrane compositions may also contain adhesion promoters including, but not limited to, clays, silicas, silicates and mixtures thereof. For example, the membrane compositions may contain talc and fumed silica. Fumed silica treated to render it hydrophobic may advantageously be employed in the present invention. Utilization of such hydrophobic particles can significantly improve electrode membrane adhesion properties and reduce deposition of protein on the membrane.

Preferably a viscosity reducing modifier is added to the polymer matrix. The viscosity reducing modifier reduces the membrane impedance and improves its wetting and mechanical properties. Preferably the modifier is selected from the group of glycidyl ethers and phthalates such as diethylhexyl phthalate.

In the event an additional chloride selective agent is desired in the compositions, additional ionophore may be added. For example, quaternary ammonium or phosphonium compounds such as tridodecylmethylammonium chloride and tetradecylammonium chloride may be employed. Notwithstanding the foregoing, the amine herein functions very effectively as chloride selective agents without the addition of any other ionophore.

According to the invention the chloride selective electrode is provided comprising the chloride selective electrode membrane and an internal reference electrode.

The electrode is useful for potentiometric determination of the chloride ion in fluid samples including, but not limited to, biological samples such as blood, urine, plasma, perspiration, spinal fluid and serum.

The present invention also provides a system for measuring chloride ion in a fluid, wherein the system comprises the chloride selective electrode of the present invention, an external reference electrode and means for measuring the electromotive force between the chloride selective electrode and the external reference electrode.

The present invention also provides a sensor assembly for determining chloride ion in a test liquid. The assembly comprises an electrically insulated substrate having a surface with an external reference electrode and a chloride selective electrode of the present invention formed thereon. The assembly further comprises a reference flow channel having means for passing reference liquid over the reference electrode and a sensor flow channel with means for passing test liquid over the chloride selective electrode. Together, the reference and sensor flow channels define a common outlet for removing liquids from the assembly.

An example of a cartridge in which the sensor in accordance with the invention may be used is disclosed in U.S. Patent 6,193,864 to SenDx Medical, Inc., CA, USA.

The chloride selective membrane can be prepared by mixing the epoxy resin and the amine as described herein with an appropriate solvent. The solvent employed may be any solvent commonly used to prepare conventional membranes and may include, for example tetrahydrofuran, cyclohexanone, xylene and toluene. Generally, the chloride selective compositions which are to be applied by a dispensing technique contain from about 10% to about 50% by weight of solids. Upon heating the substrate containing the dispensed mixture the solvent is evaporated and the chloride selective electrode membrane is obtained.

Alternatively, the method comprises stencilling a mixture of said epoxy resin and said amine onto said substrate and heating the substrate with the stencilled mixture to obtain the chloride selective electrode membrane.

The following examples serve to illustrate the present invention.

EXAMPLE 1:

Calculation of the stoichiometric excess of amine to epoxy resin is performed as outlined below.

First, the equivalent weights of the epoxy resin and the amine agent are obtained using, for example, the average equivalent weight range listed in the product literature;

Resin:  EPON ® 828 epoxy resin  Amine agent:  EPICURE® 3140 curing agent
Eq. wt.= 190g/eq                              Eq. wt.= 95g/eq

Next, parts by weight of amine required to cure 100 parts by weight of resin, referred to as "Phr" is determined as follows:

$$\text{Phr} = \frac{\text{Amine eq. wt.}}{\text{Resin eq. wt.}} \times 100 \text{ parts resin} = \frac{95\text{g/eq}}{190\text{g/eq}} \times 100 = 50$$

Thus, the stoichiometric mix ratio by weight is 50 parts by weight of amine per 100 parts of weight by epoxy resin.

The present invention, however, requires that the amine agent be present in stoichiometric excess. The stoichiometric excess is the excess of amine employed over the amount of amine required for complete curing of the epoxy resin. Thus, whereas the stoichiometric mix as calculated above corresponds to 50 parts by weight of amine per 100 parts by weight of epoxy resin, the application of *e.g.* 150 parts by weight of amine corresponds to a stoichiometric excess of (150-50)/50 x 100% = 200%. In this example, 150 parts by weight of amine corresponds to 285 grams (g) of amine per 190 grams (g) of epoxy resin.

EXAMPLE 2:

Preparation of A Chloride Selective Electrode Membrane Material Suitable for Stencilling

Into a 100 milliliter (ml) beaker containing 32 grams (g) of epoxy resin (Epon 828, available from Resolution Performance Products) was added 19 g of talc (Nytal 100, available from R. T. Vanderbilt). The resulting mixture was then stirred to a homogenous state.

Into a 100 milliliter (ml) beaker containing 48 grams (g) of polyamide curing agent (EpiKure 3140, available from Resolution Performance Products) was added 1.7 g of fumed silica (Cab-o-sil TS720, available from Cabot Corporation). The resulting mixture was then stirred to a homogenous state.

The homogenous epoxy resin mixture was then admixed with the homogenous polyamide mixture for approximately 5 minutes using a spatula.

As will be evident from Example 1, the stoichiometric excess of amine of the membrane of Example 2 was 200%.

EXAMPLE 3:

Preparation of A Chloride Selective Electrode Membrane Material Suitable for Dispensing

Into a 200 milliliter (ml) beaker containing 41.5 grams (g) of epoxy resin (Epon 828, available from Resolution Performance Products) was added 3 g of monoglycidyl ether (Heloxy 7, available from Resolution Performance Products). The resulting mixture was stirred to a homogenous state. 58.5 grams (g) of polyamide curing agent (EpiKure 3140, available from Resolution Performance Products) was added and admixed with the homogenous epoxy resin mixture for approximately 5 minutes using a spatula. 60 grams (g) of cyclohexanone was added and admixed with the epoxy/polyamide mixture.

EXAMPLE 4

Preparation of a Chloride Selective Electrode by Stencilling

The chloride selective electrode material prepared as described in Example 2 above was incorporated into a sensor assembly as described below.

A nonconducting ceramic substrate (96% alumina ($Al_2O_3$), ADS-96R from CoorsTek, Grand Junction, CO, U.S.) was ultrasonically cleaned and dried. A silver pattern serving as a conductor for the electrode was screen printed onto the ceramic substrate using silver paste QS175 (E. I. du Pont de Nemours and Company, Delaware, U.S.). The printed ceramic substrate was then dried in air by placing it in a convection oven at 115°C for fifteen (15) minutes. Thereafter, the substrate was fired in a thick film conveyor belt furnace such as that commonly used in thick film technology, employing a heating rate of 40°C per minute up to 850°C. The ceramic substrate was held at 850°C for five (5) minutes and then cooled at a rate of 40°C per minute. The thickness of the metallic conductor is in the range of 8 $\mu$m to 20 $\mu$m. The shape of the electrode is circular, with a diameter from 0.028 to 0.046 inches.

One or more layers of thick film dielectric glass ESL 4904 (Electro-Science Laboratories, Inc.) were then screen printed onto the ceramic substrate and dried, leaving the above conductor layer exposed. The ceramic substrate containing the dielectric layer was then fired in a thick film belt furnace by employing a heating rate of 40°C per minute up to 800°C and held at 800°C for five (5) minutes and then cooled at a rate of 40°C. per minute. The dielectric glass composition was selected to produce good chemical stability in the presence of electrolyte and to contain a vitreous silica phase that is favorable for silane binding with subsequent encapsulating polymeric layers. The thickness of the glass layer is usually in the 6 - 16 $\mu$m range.

A mixture of silver and silver chloride (a ratio of 70% silver and 30% silver chloride by weight) combined with solvents and polymer binder components was then screen printed on the metallic conductor. The specific formulation used was AgCl14 (Polymer Innovations, Inc., San Marcos, CA.) The ceramic substrate was then cured at 185°C in a convection oven for three hours. The thickness of the resulting Ag/AgCl electrode was in the 5 - 20 $\mu$m range. The Ag/AgCl electrode is a potentiometric sensor electrode, *i.e.* an internal reference electrode. The printed diameter of the Ag/AgCl electrode is typically more than 5% larger than the diameter of the metallic conductor so that the metallic conductor is not exposed to the chloride selective membrane.

The sensor assembly containing the chloride selective membrane electrode also has an external reference electrode supported on the assembly to provide an accurate reference potential. The reference electrode was constructed in essentially the same way as the chloride selective electrode but left out the chloride selective electrode membrane layer.

After deposition of the Ag/AgCl layer, a first polymeric layer is deposited on the substrate with openings for the electrodes. The first polymeric layer (together with the dielectric glass layer) forms the lower wall of the sensor cavities in which the electrodes are positioned.

The polymer used to form the polymeric layers is a composition of 28.1 % acrylic resin, 36.4% carbitol acetate, 34.3% calcined kaolin, 0.2% fumed silica, and 1.0% silane, noted in percentage by weight. The acrylic resin is a low molecular weight polyethylmethacrylate, such as Elvacite, part number 2041, available from Lucite International, Inc. Cordova, TN, USA. The calcined kaolin is a silaninized kaolin, such as part number HF900, available from Engelhard. The silane is an epoxy silane, such as trimethoxysilane. Silane bonds to the hydroxyl groups on the dielectric glass layer and yet is left with free functional groups to crosslink with the resin's functional groups. The first polymeric layer is deposited in three screening processes/procedures in order to attain the desired thickness (*i.e.*, approximately 0.0020 inches). Each polymeric layer is dried after each screening process. A second polymeric layer is deposited to form the upper walls of the sensor cavities. The first and second polymeric layer differ only in the diameter across the cavity at the lower cavity wall and at the upper cavity wall and the number of screening processes that are required to achieve the desired depth. In the case of the second polymeric layer, nine (9) screening procedures were required to attain the desired thickness. Each polymeric layer is dried after each screening procedure. In addition, after the last two procedures, the polymer is both screened and cured.

The sensor cavity for the 0.046 inches diameter chloride sensor has a total depth of approximately 0.0075 inches, a diameter at the upper wall of approximately 0.070 inches, and at the lower wall of approximately 0.06 inches.

Once the sensor cavities have been formed and the polymeric layers cured, the cavity of each sensor is filled with the liquid chloride selective electrode membrane material of Example 2 by stencilling. The stencil is a stainless steel sheet with laser cut apertures of the same diameter as the electrode. The thickness of the stainless steel sheet used is slightly less than the thickness of the inside wall of the sensor cavity. The apertures act as dispensing tips, i.e. they fill with the liquid chloride sensitive membrane material during printing. Following this, the stencil and substrate separate and a portion of the chloride selective electrode membrane material remains on the substrate. The appropriate stencil thickness produces a printed membrane approximately planar to the surface of the substrate.

The sensor assembly is cured at 70°C in a convection oven for approximately 3 hours. The resulting finished sensor assembly was stored under nitrogen until used.

EXAMPLE 5

Preparation of a Chloride Selective Electrode by Dispensing

The chloride selective material prepared in Example 3 was dispensed onto a ceramic substrate with sensor cavities as described in Example 4, using standard liquid dispensing instrumentation. The dispensed chloride selective polymer material was then cured for 24 hours under Argon at room temperature, and the ceramic substrate was heated to 65°C for 60 minutes to form the chloride selective electrode membrane. The resulting ceramic substrate assembly was then exposed to an ultraviolet source at an intensity of 750 millijoules per square centimeter.

COMPARATIVE EXAMPLE 1

For comparison, three chloride selective electrode membrane compositions were prepared and applied onto three similar ceramic substrates with sensor cavities as described in Example 4.

Membrane Composition A (prior art):
EPON 828 (epoxy from Resolution Performance Products (RPP)):     1.61g
Heloxy 71 (modifier from RPP):     1.07g
EpiKure 3234 (TETA curing agent from RPP):     0.46g

Membrane Composition B:
EPON 828:     1.61g
EpiKure 3234:     0.69g
Cyclohexanone:     0.96g

Membrane Composition C:
EPON 828:     0.83g
EpiKure 3140 (polyamide curing agent from RPP):     1.28g

The stoichiometric excess of amine of Membrane compositions A, B and C were 75%, 230% and 208%, respectively.
Membrane compositions A and B were applied onto the substrate by the dispensing procedure described in Example 5.
Membrane composition C was applied onto the substrate by the stencilling procedure described in Example 4.
The resulting sensors were each exposed to three aqueous samples:

Sample 1:     100 mM NaCl in MOPS-buffer (pH=7.35)
Sample 2:     80 mM NaCl in MOPS-buffer (pH=7.35)
Sample 3:     100 mM NaCl + 50 mM NaHCO$_3$ in MOPS-buffer (pH=7.35)

The sensitivity was evaluated using Samples 1 and 2, while the selectivity towards bicarbonate was evaluated using Samples 1 and 3. The results are shown in Table 1 below.

Table 1:

|  | Sensitivity (mV/decade) | Selectivity (mM excess chloride) |
|---|---|---|
| Membrane Composition A | 41.3 | +23 |
| Membrane Composition B | 46.0 | +4 |
| Membrane Composition C | 49.0 | +8 |

As can be seen from Table 1, both sensitivity and selectivity of Membrane Compositions B and C were improved as compared to Membrane Composition A.

**Claims**

1. A chloride selective electrode comprising:

    an internal reference electrode and a chloride selective electrode membrane comprising a polymeric matrix wherein said matrix comprises:

    an epoxy resin; and an amine present in stoichiometric excess; **characterised by** said amine containing an amide group selected from the group of polyamides, amidoamines and mixtures thereof, said polyamides have the general formula $(NR_1R_2)-R_3-(NR_4-C(=O)-R_6-R_6-C(=O)-NR_4-R_3)_n-(NR_1R_2)$, in which $R_1$, $R_2$, and $R_4$ are selected from hydrogen and $C_1-C_6$ alkyls, $R_3$ is $C_2-C_{10}$ alkyls, preferably containing one or more amine functions, $R_6$ is $C_8-C_{24}$ aliphatic groups, preferably containing 1-4 unsaturated functionalities, and preferably n=1-20, more preferably n=1-5; and said amidoamines have the general formula $(NR_1R_2)-R_3-NR_4-C(=O)-R_5$, in which $R_1$, $R_2$, and $R_4$ are selected from hydrogen and $C_1-C_6$ alkyls, $R_3$ is $C_2-C_{10}$ alkyls, preferably containing one or more amine functions, and $R_5$ is $C_8-C_{24}$ aliphatic groups, preferably containing 1-4 unsaturated functionalities.

2. The chloride selective electrode according to claim 1 wherein the amine is a polyamide, which is the reaction product of an acid component comprising a fatty acid dimer and a polyalkylene polyamine component

3. The chloride selective electrode according to claim 1 or 2, wherein the average molecular weight of the polyamide is preferably in the range MW=400-8,000, more preferably MW=400-2,000.

4. The chloride selective electrode according to claim 2 wherein said fatty acid dimer is dimerized fatty acid from an oil selected from tall oil, castor oil, linseed oil, soybean oil and mixtures thereof.

5. The chloride selective electrode according to claim 2, 3 or 4 wherein said polyalkylene polyamine component is selected from the group consisting of diethylene triamine, triethylene tetramine and tetraethylene pentamine, and mixtures thereof.

6. The chloride selective electrode according to claim 1 wherein the amine is an amidoamine, which is the reaction product of an acid component selected from the group of saturated and unsaturated fatty acids and an amine component selected from alkylene diamines, polyalkylene polyamines, and mixtures thereof.

7. The chloride selective electrode according to claim 1 or 6, wherein the average molecular weight of the amidoamine is preferably in the range MW=200-1,000, more preferably MW=300-500.

8. The chloride selective electrode according to any of the preceding claims wherein said epoxy resin comprises a polymer of bisphenol A and epichlorohydrin.

9. The chloride selective electrode according to any of the preceding claims wherein said amine is present in a stoichiometric excess of at least 150%.

10. The chloride selective electrode according to any of the preceding claims wherein said membrane further comprises an adhesion promoter selected from the group consisting of clays, silicas, silicates and mixtures thereof.

11. The chloride selective electrode according to any of the preceding claims wherein said membrane further comprises a viscosity reducing modifier, preferably selected from the group of glycidyl ethers and phthalates.

12. A system for measuring chloride ion in a fluid, said system comprising:

    a chloride selective electrode according to any of the claims 1-11;
    an external reference electrode; and
    means for measuring the electromotive force between said chloride selective electrode and said external reference electrode.

13. A sensor assembly for determining chloride ion in a test liquid, comprising:

an electrically insulated substrate having a surface with an external reference electrode and the chloride selective electrode according to any of claims 1-11 formed thereon;
a reference flow channel having means for passing reference liquid over the reference electrode; and
and a sensor flow channel having means for passing test liquid over the chloride selective electrode,

wherein said reference and sensor flow channels define a common outlet for removing liquids from the assembly.

**Patentansprüche**

1. Chloridselektive Elektrode, umfassend:

eine interne Bezugselektrode und eine chloridselektive Elektrodenmembran, umfassend eine polymere Matrix, wobei die Matrix Folgendes umfasst:

ein Epoxidharz und ein Amin, das in einem stöchiometrischen Überschuss vorliegt; **dadurch gekennzeichnet, dass** das Amin eine Amidgruppe enthält, die aus der Gruppe von Polyamiden, Amidoaminen und Gemischen davon ausgewählt ist,

wobei die Polyamide die allgemeine Formel $(NR_1R_2)$-$R_3$-$(NR_4$-$C(=O)$-$R_6$-$R_6$-$C(=O)$-$NR_4$-$R_3)_n$-$(NR_1R_2)$ aufweisen, in der $R_1$, $R_2$ und $R_4$ aus Wasserstoff und $C_1$-$C_6$-Alkylen ausgewählt sind, $R_3$ $C_2$-$C_{10}$-Alkyle sind, die vorzugsweise eine oder mehrere Aminfunktionen enthalten, $R_6$ $C_8$-$C_{24}$-aliphatische Gruppen sind, die vorzugsweise 1 - 4 ungesättigte Funktionalitäten enthalten, und vorzugsweise n = 1 - 20, mehr bevorzugt n = 1 - 5; und
die Amidoamine die allgemeine Formel $(NR_1R_2)$-$R_3$-$NR_4$-$C(=O)$-$R_5$ aufweisen, in der $R_1$, $R_2$ und $R_4$ aus Wasserstoff und $C_1$-$C_6$-Alkylen ausgewählt sind, $R_3$ $C_2$-$C_{10}$-Alkyle sind, die vorzugsweise eine oder mehrere Aminfunktionen enthalten, und $R_5$ $C_8$-$C_{24}$-aliphatische Gruppen sind, die vorzugsweise 1 - 4 ungesättigte Funktionalitäten enthalten.

2. Chloridselektive Elektrode nach Anspruch 1, wobei das Amin ein Polyamid ist, bei dem es sich um das Reaktionsprodukt einer Säurekomponente, umfassend ein Fettsäuredimer, und einer Polyalkylenpolyaminkomponente handelt.

3. Chloridselektive Elektrode nach Anspruch 1 oder 2, wobei das durchschnittliche Molekulargewicht des Polyamids vorzugsweise im Bereich von MG = 400 - 8000, mehr bevorzugt von MG = 400 - 2000 liegt.

4. Chloridselektive Elektrode nach Anspruch 2, wobei das Fettsäuredimer dimerisierte Fettsäure aus einem Öl ist, das aus Tallöl, Rizinusöl, Leinöl, Sojaöl und Gemischen davon ausgewählt ist.

5. Chloridselektive Elektrode nach Anspruch 2, 3 oder 4, wobei die Polyalkylenpolyaminkomponente aus der Gruppe bestehend aus Diethylentriamin, Triethylentetramin und Tetraethylenpentamin und Gemischen davon ausgewählt ist.

6. Chloridselektive Elektrode nach Anspruch 1, wobei das Amin ein Amidoamin ist, bei dem es sich um das Reaktionsprodukt einer Säurekomponente, die aus der Gruppe von gesättigten und ungesättigten Fettsäuren ausgewählt ist, und einer Aminkomponente, die aus Alkylendiaminen, Polyalkylenpolyaminen und Gemischen davon ausgewählt ist, handelt.

7. Chloridselektive Elektrode nach Anspruch 1 oder 6, wobei das durchschnittliche Molekulargewicht des Amidoamins vorzugsweise im Bereich von MG = 200 - 1000, mehr bevorzugt von MG = 300 - 500 liegt.

8. Chloridselektive Elektrode nach einem der vorhergehenden Ansprüche, wobei das Epoxidharz ein Polymer von Bisphenol A und Epichlorhydrin umfasst.

9. Chloridselektive Elektrode nach einem der vorhergehenden Ansprüche, wobei das Amin in einem stöchiometrischen Überschuss von mindestens 150 % vorliegt.

**10.** Chloridselektive Elektrode nach einem der vorhergehenden Ansprüche, wobei die Membran weiterhin einen Haftvermittler umfasst, der aus der Gruppe bestehend aus Tonen, Siliciumdioxiden, Silicaten und Gemischen davon ausgewählt ist.

**11.** Chloridselektive Elektrode nach einem der vorhergehenden Ansprüche, wobei die Membran weiterhin ein die Viskosität senkendes Modifikationsmittel umfasst, das aus der Gruppe von Glycidylethern und Phthalaten ausgewählt ist.

**12.** System zum Messen von Chloridionen in einem Fluid, wobei das System Folgendes umfasst:

eine chloridselektive Elektrode nach einem der Ansprüche 1 - 11;
eine externe Bezugselektrode und
Mittel zum Messen der elektromotorischen Kraft zwischen der chloridselektiven Elektrode und der externen Bezugselektrode.

**13.** Sensoreinheit zum Bestimmen von Chloridionen in einer Testflüssigkeit, umfassend:

ein elektrisch isoliertes Substrat mit einer Oberfläche, wobei eine externe Bezugselektrode und die chloridselektive Elektrode nach einem der Ansprüche 1 - 11 darauf ausgebildet sind;
einen Bezugsfließkanal mit Mitteln zur Leitung von Bezugsflüssigkeit über die Bezugselektrode und
einen Sensorfließkanal mit Mitteln zum Leiten von Testflüssigkeit über die chloridselektive Elektrode;

wobei der Bezugsfließkanal und der Sensorfließkanal einen gemeinsamen Abfluss zum Ablassen von Flüssigkeiten aus der Einheit abgrenzen.

**Revendications**

**1.** Electrode sélective de chlorure comprenant :

une électrode de référence interne et une membrane d'électrode sélective de chlorure comprenant une matrice polymère, dans laquelle ladite matrice comprend :

une résine époxy ; et
une amine présente en excès stoechiométrique;

**caractérisée en ce que** ladite amine contient un groupe amide choisi dans le groupe des polyamides, des amidoamines et des mélanges de ceux-ci ; lesdits polyamides ayant une formule générale $(NR_1R_2)$-$R_3$-$(NR_4$-C(=O)-$R_6$-$R_6$-C(=O)-$NR_4$-$R_3)_n$-$(NR_1R_2)$, dans laquelle $R_1$, $R_2$ et $R_4$ sont choisis parmi l'hydrogène et les alkyls en $C_1$-$C_6$, $R_3$ est un alkyle en $C_2$-$C_{10}$, de préférence contenant une ou plusieurs fonctions amine, $R_6$ est un groupe aliphatique en $C_8$-$C_{24}$, de préférence contenant 1 à 4 fonctionnalités insaturées, et de préférence n = 1 à 20, et plus préférablement n = 1 à 5 ; et
lesdites amidoamines ont la formule générale $(NR_1R_2)$-$R_3$-$NR_4$-C(=O)-$R_5$, dans laquelle $R_1$, $R_2$ et $R_4$ sont choisis parmi l'hydrogène et les alkyls en $C_1$-$C_6$, $R_3$ est un alkyle en $C_2$-$C_{10}$, de préférence contenant une ou plusieurs fonctions amine, et $R_5$ est un groupe aliphatique en $C_8$-$C_{24}$, de préférence contenant 1 à 4 fonctionnalités insaturées.

**2.** Electrode sélective de chlorure selon la revendication 1, dans laquelle l'amine est un polyamide, qui est le produit de réaction d'un composant acide comprenant un dimère d'acide gras et un composant de polyalkylène polyamine.

**3.** Electrode sélective de chlorure selon la revendication 1 ou 2, dans laquelle la masse moléculaire moyenne du polyamide est de préférence comprise dans la plage MW = 400 à 8 000, plus préférablement MW = 400 à 2 000.

**4.** Electrode sélective de chlorure selon la revendication 2, dans laquelle ledit dimère d'acide gras est un acide gras dimérisé d'une huile choisie parmi le tallol, l'huile de ricin, l'huile de lin, l'huile de soja et des mélanges de celles-ci.

**5.** Electrode sélective de chlorure selon la revendication 2, 3 ou 4, dans laquelle ledit composant de polyamine de polyalkylène est choisi dans le groupe constitué par les triamines de diéthylène, les tétramines de triéthylène et les pentamines de tétraéthylène, et des mélanges de celles-ci.

**6.** Electrode sélective de chlorure selon la revendication 1, dans laquelle l'amine est une amidoamine, qui est le produit de réaction d'un composant acide choisi dans le groupe des acides gras saturés et insaturés et d'un composant amine choisi parmi les diamines d'alkylène, les polyamines de polyalkylène et les mélanges de celles-ci.

**7.** Electrode sélective de chlorure selon la revendication 1 ou 6, dans laquelle la masse moléculaire moyenne de l'amidoamine est de préférence comprise dans la plage MW = 200 à 1 000, plus préférablement MW = 300 à 500.

**8.** Electrode sélective de chlorure selon l'une quelconque des revendications précédentes, dans laquelle ladite résine époxy comprend un polymère de diphénol A et d'épichlorohydrine.

**9.** Electrode sélective de chlorure selon l'une quelconque des revendications précédentes, dans laquelle ladite amine est présente en un excès stoechiométrique d'au moins 150 %.

**10.** Electrode sélective de chlorure selon l'une quelconque des revendications précédentes, dans laquelle ladite membrane comprend en outre un promoteur d'adhésion choisi dans le groupe constitué par les argiles, les silices, les silicates et les mélanges de ceux-ci.

**11.** Electrode sélective de chlorure selon l'une quelconque des revendications précédentes, dans laquelle ladite membrane comprend en outre un agent modifiant réducteur de viscosité, de préférence choisi dans le groupe des éthers de glycidyle et des phtalates.

**12.** Système de mesure des ions de chlorure dans un fluide, ledit système comprenant :

une électrode sélective de chlorure selon l'une quelconque des revendications 1 à 11 ;
une électrode de référence externe ; et
un moyen de mesure de la force électromotrice entre ladite électrode sélective de chlorure et ladite électrode de référence externe.

**13.** Ensemble de détection destiné à déterminer les ions de chlorure dans un liquide témoin, comprenant :

un substrat électriquement isolé ayant une surface avec une électrode de référence externe et l'électrode sélective de chlorure selon l'une quelconque des revendications 1 à 11 formée sur celle-ci ;
un canal d'écoulement de référence comprenant un moyen permettant de faire passer le liquide référence sur l'électrode de référence ; et
un canal d'écoulement de détection comprenant un moyen permettant de faire passer le liquide témoin sur l'électrode sélective de chlorure ;

dans lequel lesdits canaux d'écoulement de référence et de détection définissent un orifice d'évacuation commun destiné à éliminer les liquides de l'ensemble.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6340714 B

• US 6193864 B

**Non-patent literature cited in the description**

• **Oesch et al.** Ion Selective Membranes for Clinical Use. *Clinical Chemistry,* 1986, vol. 32 (8), 1448-1459

• **Burnett et al.** Use of Ion Selective Electrodes for Blood-Electrolyte Analysis. *Clin. Chem. Lab Med.,* 2000, vol. 38 (4), 363-370